# EUROPEAN PATENT APPLICATION

(11) **EP 2 897 055 A1**
(43) Date of publication of application: **22.07.2015**
(21) Application number: 12884609.4
(22) Date of filing: 11.09.2012
(51) Int. Cl.: G06F 17/30

(54) **INFORMATION PROCESSING DEVICE, INFORMATION PROCESSING METHOD, AND PROGRAM**

(71) Applicant: Kabushiki Kaisha Toshiba, Minato-ku Tokyo 105-8001 (JP)
(72) Inventor: TANIGUCHI, Toru, Tokyo 105-8001 (JP); SAKAI, Masaru, Tokyo 105-8001 (JP); ARIU, Masahide, Tokyo 105-8001 (JP); FUJIMURA, Hiroshi, Tokyo 105-8001 (JP)
(74) Representative: Granleese, Rhian Jane
(86) International application number: PCT/JP2012/073218
(87) International publication number: WO 2014/041607

(57) **Abstract**

There are provided an information processing device, an information processing method, and a program that enable selection of a suitable correction method for correcting a keyword which is a target to be corrected. The information processing device according to an embodiment includes an obtaining unit, a display control unit, a detecting unit, a plurality of correcting units, and a selecting unit. The obtaining unit obtains a keyword. The display control unit performs control to display the keyword on a display unit. The detecting unit detects a gesture operation performed on the display unit. The plurality of correcting units are capable of correcting a correction target keyword to be corrected among one or more keywords displayed on the display unit and implement mutually different correction methods one of which includes correction in the form of deleting the correction target keyword. According to the gesture operation detected by the detecting unit, the selecting unit selects one of the plurality of correcting units as the correcting unit for correcting the correction target keyword.

## Description

### Field

An embodiment of the present invention is related to an information processing device, an information processing method, and a program.

### Background

Typically, an information processing device is known that presents information or performs a search according to a keyword input thereto. Examples of such an information processing device include a car navigation system in which a geographical name or a facility name is treated as a keyword and location information corresponding to the keyword is obtained from map information and displayed on a display; and a mobile device such as a PC, a smartphone or a tablet in which webpages are retrieved based on arbitrary keywords and the retrieved webpages are displayed.

Moreover, in recent years, from the perspective of reducing the time and efforts of a user to input keywords, aside from the method of inputting a keyword by operating a keyboard or buttons, there are other methods such as a method in which words uttered by a user and captured by a microphone are subjected to voice recognition and keywords among the uttered words are input, or a method in which characters drawn by a user on a touch-sensitive panel are recognized and keywords are input. Such keyword inputting methods using voice recognition or character recognition are highly intuitive and convenient for the user. However, on the other hand, there are times when a keyword not matching with the user intention (an "incorrect keyword") gets input.

For example, the accuracy of voice recognition is influenced a great deal by the environmental noise and ambiguity in the uttered words. Hence, it is not always the case that a correct voice recognition result is obtained with reliability, and false recognition occurs on some level. For that reason, in an information processing device in which a keyword is input using voice recognition, it is common practice to simultaneously install a device for correcting any incorrect keyword that gets input due to false recognition. Conventionally, various technologies are known as the methods for correcting incorrect keywords. For example, in a retrieval device in which a string of keywords obtained using voice recognition represents the search condition for searching a predetermined database; a technology for correcting incorrect keywords is known in which, when an incorrect keyword is input, a plurality of correction-candidate keywords having similar pronunciations to the incorrect keyword is displayed in the form of a correction candidate list and the user is allowed to select a correction-candidate keyword from that list.

### Citation List

### Patent Literature

Patent Literature 1: JP-A 2010-231433 (KOKAI)
Patent Literature 2: JP-A 2000-259178 (KOKAI)
Patent Literature 1: JP-A 2008-090625 (KOKAI)

### Summary

### Technical Problem

However, in the conventional technology, regarding the methods of correcting an incorrect keyword (a correction target keyword to be corrected), other than the correction method of substituting a correction-candidate keyword having similar pronunciation, no other correction method (such as deletion or substitution using a homophone) can be implemented. Hence, even if an incorrect keyword is simply to be deleted, the user needs to use a keyboard or to press a delete button provided in the correction candidate list or on the screen. Moreover, if a word having a similar sound is to be selected, then the user needs to search for the homophones from a long correction-candidate keyword list. That is, a proper correction method cannot be explicitly selected. Hence, keyword correction requires time and efforts. In that regard, it is an object of the present invention to provide an information processing device, an information processing method, and a program that enable selection of a proper correction method for correcting the correction target keyword.

### Solution to Problem

An information processing device according to an embodiment includes an obtaining unit, a display control unit, a detecting unit, a plurality of correcting units, and a selecting unit. The obtaining unit obtains a keyword. The display control unit performs control to display the keyword on a display unit. The detecting unit detects a gesture operation performed on the display unit. The plurality of correcting units are capable of correcting a correction target keyword to be corrected among one or more keywords displayed on the display unit and implement mutually different correction methods one of which includes correction in form of deleting the correction target keyword. The selecting unit selects, according to a gesture operation detected by the detecting unit, one of the plurality of correcting units as the correcting unit for correcting the correction target keyword.

An information processing method according to an embodiment includes obtaining a keyword; performing control to display the keyword on a display unit; and selecting, according to a gesture operation performed on the display unit, one of a plurality of correcting units, which are capable of correcting a correction target keyword to be corrected among one or more of the keywords displayed on the display unit and which implement mutually different correction methods, one of the correction methods including correction in form of deleting the correction target keyword, as the correcting unit for correcting the correction target keyword.

A program according to an embodiment causes a computer to function as an obtaining unit, a display control unit, a detecting unit, a plurality of correcting units, and a selecting unit. The obtaining unit obtains a keyword. The display control unit performs control to display the keyword on a display unit. The detecting unit detects a gesture operation performed on the display unit. The plurality of correcting units are capable of correcting a correction target keyword to be corrected among one or more keywords displayed on the display unit and implement mutually different correction methods one of which includes correction in form of deleting the correction target keyword. The selecting unit selects, according to a gesture operation detected by the detecting unit, one of the plurality of correcting units as the correcting unit for correcting the correction target keyword.

### Brief Description of Drawings

FIG. 1 is a diagram that schematically illustrates a general outline of an embodiment.
FIG. 2 is a diagram illustrating an exemplary functional configuration of an information processing device according to the embodiment.
FIG. 3 is a diagram illustrating a specific example of the functional configuration of an obtaining unit according to the embodiment.
FIG. 4 is a diagram illustrating a specific example of the functional configuration of a correcting unit according to the embodiment.
FIG. 5 is a diagram illustrating a specific example of the functional configuration of a correcting unit according to the embodiment.
FIG. 6 is a diagram illustrating a specific example of the functional configuration of a correcting unit according to the embodiment.
FIG. 7 is a diagram illustrating a specific example of the functional configuration of a correcting unit according to the embodiment.
FIG. 8 is a diagram illustrating a specific example of the functional configuration of a correcting unit according to the embodiment.
FIG. 9 is a diagram illustrating a specific example of the functional configuration of a correcting unit according to the embodiment.
FIG. 10 is a diagram illustrating an image of an operation screen according to the embodiment.
FIG. 11 is a diagram illustrating an image of the operation screen according to the embodiment.
FIG. 12 is a diagram illustrating an image of the operation screen according to the embodiment.
FIG. 13 is a diagram illustrating an image of the operation screen according to the embodiment.
FIG. 14 is a diagram illustrating an image of the operation screen according to the embodiment.
FIG. 15 is a diagram illustrating a specific example of the functional configuration of an obtaining unit according to a modification example.

### Description of Embodiments

An embodiment of an information processing device, an information processing method, and a program according to the present invention is described below in detail with reference to the accompanying drawings.

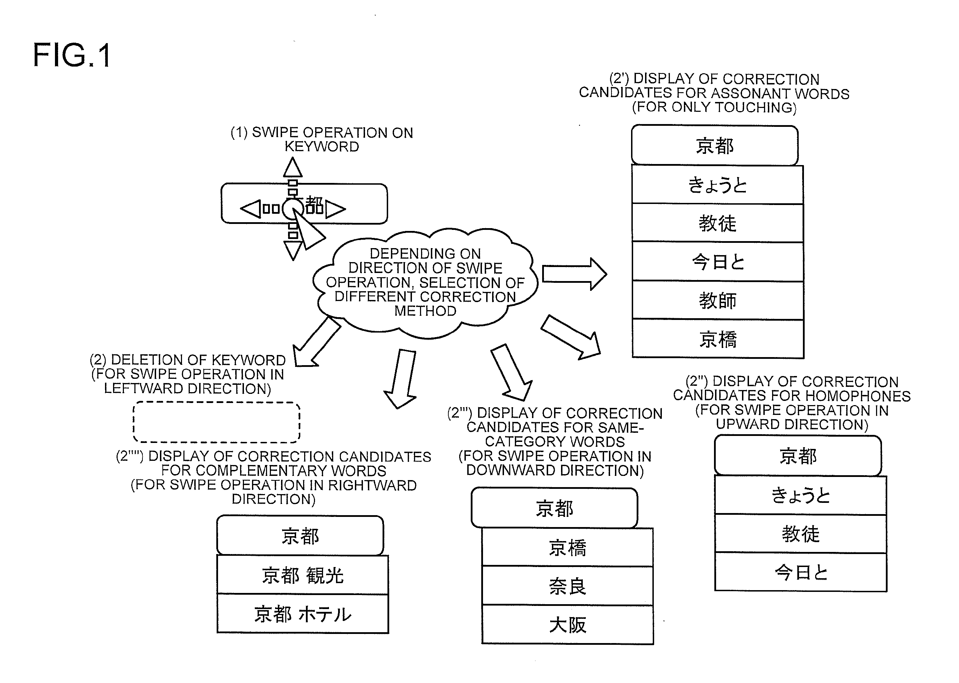

FIG. 1 is a diagram that schematically illustrates a general outline of the present embodiment. In the present embodiment, when a swipe operation (an example of a gesture operation) is performed in which the screen of a touch-sensitive panel is stroked while touching a finger to an area of the touch-sensitive panel displaying the correction target keyword, a different correction method is selected depending on the direction of performing the swipe operation, and correction is performed based on the selected correction method. Although described later in detail, in the present embodiment, a gesture operation including only touching keywords is associated with a correction method in which correction candidates in the form of assonant words having similar pronunciation to the correction target keyword are displayed and the correction candidate selected from those correction candidates is substituted for the correction target keyword. Moreover, a swipe operation of stroking the screen in the upward direction is associated with a correction method in which correction candidates in the form of homophones having similar pronunciation to the correction target keyword but having different spellings are displayed and the correction candidate selected from those correction candidates is substituted for the correction target keyword. Moreover, a swipe operation of stroking the screen in the downward direction is associated with a correction method in which correction candidates belonging to the same category as the correction target keyword are displayed and the correction candidate selected from those correction candidates is substituted for the correction target keyword. Furthermore, a swipe operation of stroking the screen in the leftward direction is associated with a correction method in which the correction target keyword is deleted. Moreover, a swipe operation of stroking the screen in the rightward direction is associated with a correction method in which correction candidates in the form of complementary words including the correction target keyword are displayed and the correction candidate selected from those correction candidates is substituted for the correction target keyword. The detailed explanation is given below.

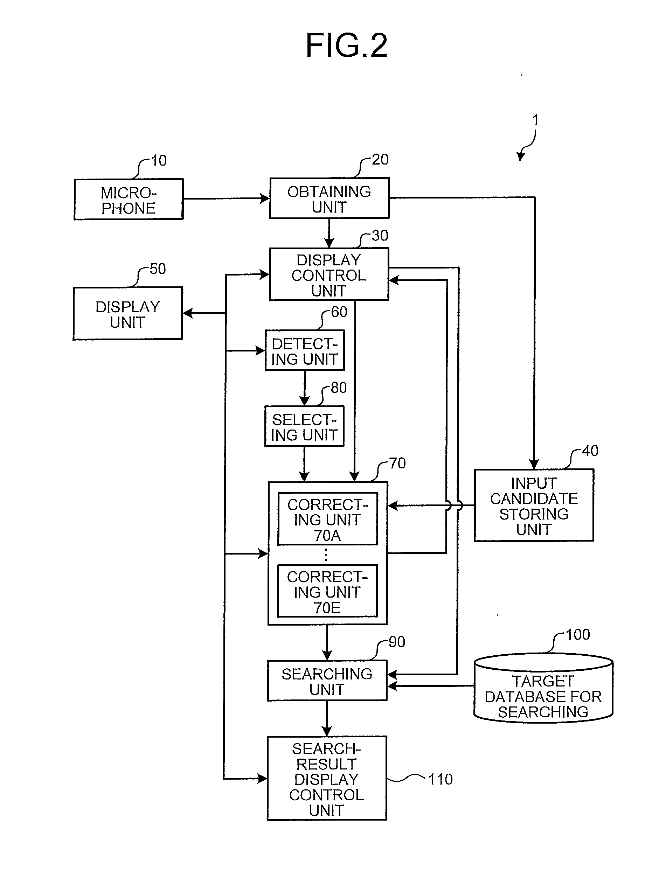

FIG. 2 is a block diagram illustrating an exemplary functional configuration of an information processing device 1 according to the present embodiment. As illustrated in FIG. 2, the information processing device 1 includes a microphone 10, an obtaining unit 20, a display control unit 30, an input candidate storing unit 40, a display unit 50, a detecting unit 60, a plurality of correcting units 70 (70A to 70E), a selecting unit 80, a searching unit 90, a target database 100 for searching, and a search-result display control unit 110.

The microphone 10 has the function of obtaining the voice of a user in the form of digital signals. In the following explanation, the digital signals obtained by the microphone 10 are sometimes called "voice signals". Then, the microphone 10 sends the obtained voice signals to the obtaining unit 20.

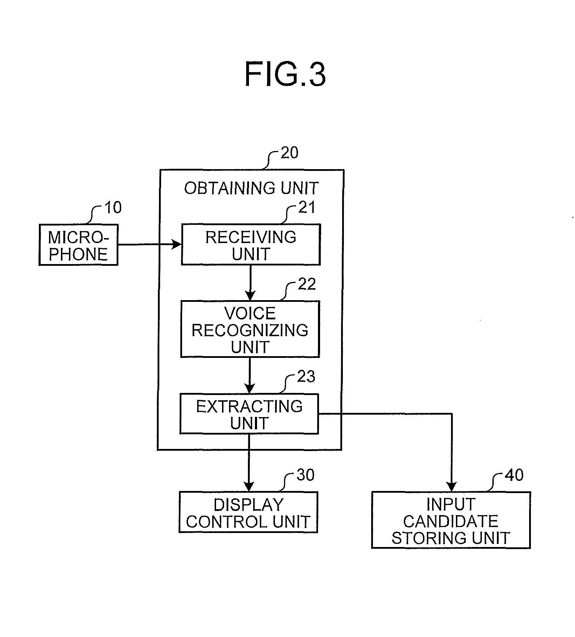

The obtaining unit 20 obtains, from the voice signals received from the microphone 10, a keyword uttered by the user. Herein, the keyword can be of any arbitrary type. For example, the keyword can be a word or a phrase. FIG. 3 is a block diagram illustrating a specific example of the functional configuration of the obtaining unit 20. As illustrated in FIG. 3, the obtaining unit 20 includes a receiving unit 21, a voice recognizing unit 22, and an extracting unit 23.

The receiving unit 21 receives voice signals sent by the microphone 10. In the example illustrated in FIG. 3, the receiving unit 21 receives input of voice signals received from the microphone 10; performs noise removal and converts the signals into a vector sequence of a lower dimension so as to make the voice signals easier to use for the voice recognizing unit 22; and sends the voice signals to the voice recognizing unit 22.

The voice recognizing unit 22 performs a voice recognition on the voice signals sent by the receiving unit 21. In the present embodiment, as a result of the voice recognition performed by the voice recognizing unit 22, the voice signals sent by the receiving unit 21 are converted into an intermediate expression (also called a "phoneme lattice") in which recognition candidates are expressed with a network structure formed by joining phonemes and the likelihoods of being phonemes as arcs. Then, the intermediate expression (the voice recognition result), which is obtained as a result of the voice recognition performed by the voice recognizing unit 22, is sent to the extracting unit 23.

The extracting unit 23 generates a plurality of keyword candidates from the intermediate expression sent by the voice recognizing unit 22; and extracts, as the keyword uttered by the user, a keyword candidate, from among a plurality of generated keyword candidates, that has the highest score indicating the likelihood with the input voice signals. Then, the extracting unit 23 sends the extracted keyword to the display control unit 30. Moreover, one or more keyword candidates, other than the keyword extracted by the extracting unit 23, are associated with the extracted keyword as an input candidate keyword group and stored in the input candidate storing unit 40. Meanwhile, the method of performing voice recognition and keyword extraction is not limited to the details given above. Alternatively, it is possible to use various known technologies.

The display control unit 30 performs control to display the keyword obtained by the obtaining unit 20 (in the present embodiment, the keyword extracted by the extracting unit 23) on the display unit 50. Herein, the display unit 50 is a device for displaying a variety of information, and has the function of presenting character/drawings on the screen installed on the front surface. The display unit 50 presents items respectively corresponding to the display control unit 30, the correcting unit 70, and the search-result display control unit 110. In the present embodiment, the display unit 50 is configured with a touch-sensitive panel display.

The detecting unit 60 detects a gesture operation performed on the display unit 50. More particularly, the detecting unit 60 has the function of detecting the positions at which the user touches the screen and detects the trajectory of the positions of touch. Based on the detected positions of touch and the trajectory thereof, the detecting unit 60 detects the type of gesture operation. In this embodiment, a gesture operation means touch gesture operation performed by moving a finger or an input unit such as or a pen on the screen. Moreover, the detecting unit 60 sends information indicating the detected positions of touch and the trajectory thereof to the display control unit 30, the correcting unit 70, and the search-result display control unit 110. As a result, the display control unit 30, the correcting unit 70, and the search-result display control unit 110 become able to detect the candidate, from among the displayed candidates (such as keywords), that has been selected.

Meanwhile, a gesture operation detectable by the detecting unit 60 is not limited to a touch gesture operation. Alternatively, for example, the detecting unit 60 can be configured to include an imaging device such as a camera and, from an image taken by the imaging device, can detect a gesture operation performed by the user without touching the screen.

The plurality of correcting units 70 (70A to 70E) are capable of correcting the correction target keyword, among one or more keywords displayed on the display unit 50, by implementing mutually different correction methods. One of the correction methods includes correction in the form of deleting the correction target keyword. In the present embodiment, although five correcting units 70 (the correcting unit 70A to the correcting unit 70E) are provided, the types and the number of the correcting units 70 are not limited to this example. The details about the correcting unit 70A to the correcting unit 70E are given later.

The selecting unit 80 selects, according to the gesture operation detected by the detecting unit 60, one of the plurality of correcting units 70 as the correcting unit 70 for correcting the correction target keyword. The selected correcting unit 70 then receives, from the display control unit 30, a notification about the correction target keyword that is selected by the user by performing a touch operation from among the keywords displayed on the display unit 50.

In the present embodiment, as a result of a touch operation performed by the user on the screen of the display unit 50, the correction target keyword is selected from one or more keywords displayed on the screen. Then, when a specific gesture operation of the user is detected, the correcting unit 70 corresponding to the specific gesture operation is selected. Subsequently, the selected correcting unit 70 performs correction. In the present embodiment, the five correcting units 70 (70A to 70E) are associated on a one-to-one basis with the following operations: a gesture operation including only touching (i.e., an operation in which, after the correction target keyword is selected using a touch operation, the finger is taken off the screen without performing a swipe operation); a swipe operation of stroking the screen in the upward direction; a swipe operation of stroking the screen in the downward direction; a swipe operation of stroking the screen in the leftward direction; and a swipe operation of stroking the screen in the rightward direction. More particularly, the correcting unit 70A is associated with a gesture operation including only touching; the correcting unit 70B is associated with a swipe operation of stroking the screen in the upward direction; the correcting unit 70C is associated with a swipe operation of stroking the screen in the downward direction; the correcting unit 70D is associated with a swipe operation of stroking the screen in the leftward direction; and the correcting unit 70E is associated with a swipe operation of stroking the screen in the rightward direction. Given below are the specific details of each correcting unit 70.

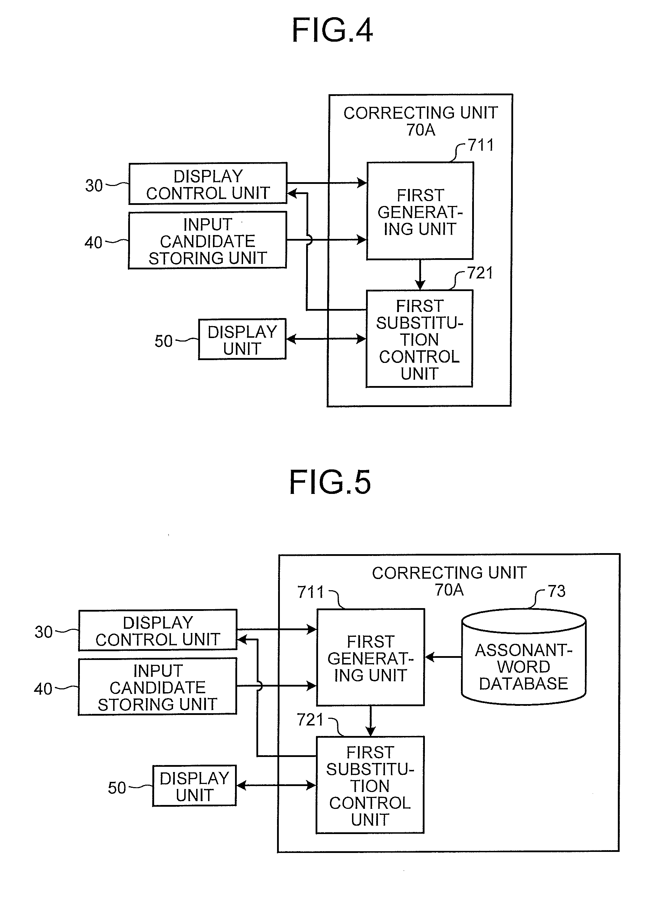

FIG. 4 is a block diagram illustrating a specific example of the functional configuration of the correcting unit 70A associated with a gesture operation including only touching. As illustrated in FIG. 4, the correcting unit 70A includes a first generating unit 711 and a first substitution control unit 721. The first generating unit 711 generates correction-candidate keywords (called "first correction-candidate keywords") that have similar pronunciation to the correction target keyword notified by the display control unit 30. In the example illustrated in FIG. 4, the first generating unit 711 obtains, from the input candidate storing unit 40, an input candidate keyword group W cond(w) corresponding to a correction target keyword w notified by the display control unit 30; and generates the input candidate keyword group W_cond(w) as a first correction-candidate keyword group W_asim(w).

For example, as illustrated in FIG. 5, the first generating unit 711 can refer to an assonant-word database 73 and generate the first correction-candidate keywords. The assonant-word database 73 can generate, with respect to a particular keyword w, a homophone keyword group W_asim(w); or can generate W_asim(w, W) in which, with respect to a provided keyword w and a keyword group W, the keywords in W that have similar pronunciation to the keyword w are ranked in the order of similarity to w. Using that, the correction target keyword w and a word group similar to the input candidate keyword group W_cond(w) corresponding to the correction target keyword w can be generated as the first correction-candidate keyword group W_asim (w) or W_asim (w, W_cond (w)).

Returning to the explanation with reference to FIG. 4, the first substitution control unit 721 performs control to substitute the first correction-candidate keyword, which is selected by the user from among one or more first correction-candidate keyword(s) (from the first correction-candidate keyword group W_asim(w)) generated by the first generating unit 711, for the correction target keyword. More particularly, the explanation is given below. Firstly, the first substitution control unit 721 performs control to display the first correction-candidate keyword group W_asim(w), which is generated by the first generating unit 711, on the display unit 50. Then, from the first correction-candidate keyword group W_asim(w) displayed on the screen of the display unit 50, the user touches one of the first correction-candidate keywords to select it. The first substitution control unit 721 receives a notification from the detecting unit 60 about information indicating the position of touch, and accordingly detects the selected first correction-candidate keyword. Then, the first substitution control unit 721 notifies the display control unit 30 about the selected first correction-candidate keyword, and instructs the display control unit 30 to display the selected first correction-candidate keyword by substituting it for the correction target keyword. In response to the instruction, the display control unit 30 performs control to display the first correction-candidate keyword, which is notified by the first substitution control unit 721, by substituting it for the correction target keyword.

In this way, the correcting unit 70A corrects the correction target keyword by substituting a first candidate keyword, which has similar pronunciation to the correction target keyword, for the correction target keyword. Such a correction method implemented by the correcting unit 70A is suitable in correcting substitution errors during voice recognition.

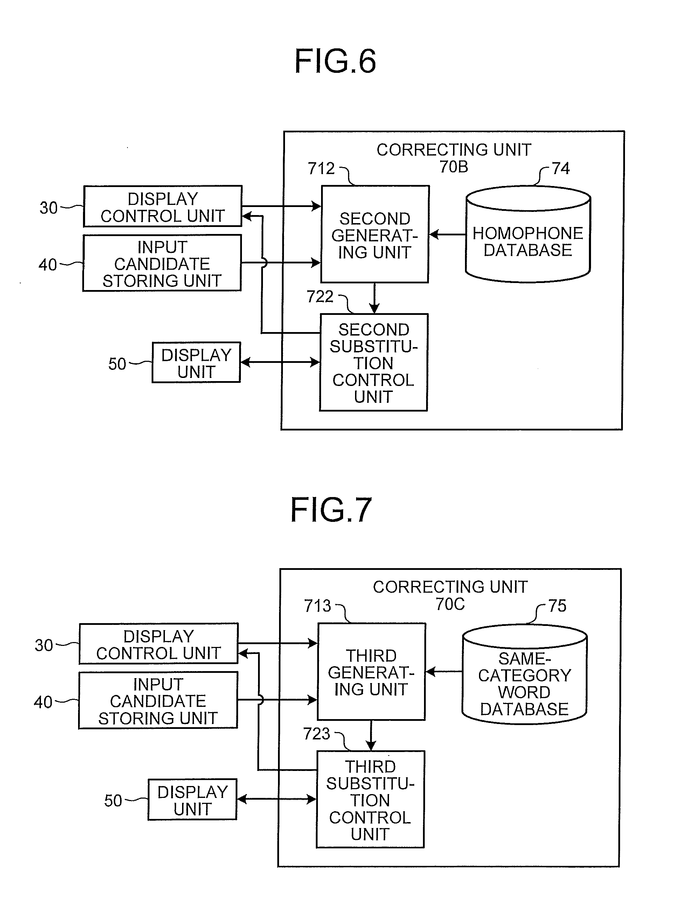

Given below is the explanation about the correcting unit 70B associated with a swipe operation in the upward direction. FIG. 6 is a block diagram illustrating a specific example of the functional configuration of the correcting unit 70B. As illustrated in FIG. 6, the correcting unit 70B includes a second generating unit 712, a second substitution control unit 722, and a homophone database 74.

The second generating unit 712 generates correction-candidate keywords (called "second correction-candidate keywords") that have the same pronunciation as but different spellings from (i.e., that represent homophones of) the correction target keyword notified by the display control unit 30. More particularly, the explanation is given below. Firstly, the second generating unit 712 sends a correction target keyword w, which is notified by the display control unit 30, to the homophone database 74. Then, the homophone database 74 generates a homophone group W_msam(w) with respect to the correction target keyword w notified from the second generating unit 712, and sends the homophone group W_msam(w) to the second generating unit 712. Subsequently, the second generating unit 712 generates the homophone group W_msam(w), which is obtained from the homophone database 74, as a conversion candidate keyword group. In this way, second correction-candidate keywords are generated that have the same pronunciation as the correction target keyword but have different spellings from the correction target keyword.

Alternatively, for example, the second generating unit 712 can obtain, from the input candidate storing unit 40, the input candidate keyword group W_cond(w) corresponding to the correction target keyword w notified by the display control unit 30; and can send the input candidate keyword group W_cond(w) to the homophone database 74. In that case, the homophone database 74 generates a homophone group W_msam(w, W_cond(w)) of keywords belonging to the input candidate keyword group W_cond(w) notified by the second generating unit 712, and sends the homophone group W_msam(w, W_cond(w)) to the second generating unit 712. Subsequently, the second generating unit 712 can generate the homophone group W_msam(w, W_cond(w)), which is obtained from the homophone database 74, as the second correction-candidate keyword group.

The second substitution control unit 722 performs control to substitute the second correction-candidate keyword, which is selected by the user from among one or more second correction-candidate keyword(s) (from the second correction-candidate keyword group) generated by the second generating unit 712, for the correction target keyword. More particularly, the explanation is given below. Firstly, the second substitution control unit 722 performs control to display the second correction-candidate keyword group (W_msam(w) or W_msam(w, W_cond(w))), which is generated by the second generating unit 712, on the display unit 50. Then, from among the second correction-candidate keyword group displayed on the screen of the display unit 50, the user touches one of the second correction-candidate keywords and to select it. Subsequently, the second substitution control unit 722 notifies the display control unit 30 about the selected second correction-candidate keyword, and instructs the display control unit 30 to display the selected second correction-candidate keyword by substituting it for the correction target keyword. In response to the instruction, the display control unit 30 performs control to display the second correction-candidate keyword, which is notified by the second substitution control unit 722, by substituting it for the correction target keyword.

In this way, the correcting unit 70B corrects the correction target keyword by substituting a second candidate keyword, which has similar pronunciation as but a different spelling from the correction target keyword, for the correction target keyword. As a result of implementing such a correction method, in the case in which the correction target keyword w obtained by performing voice recognition has the same pronunciation as but a different spelling than a user-intended keyword w_int, the correction target keyword w can be corrected in a simpler manner than selecting a correction candidate from W cond(w). Thus, the correction method implemented by the correcting unit 70B is suitable in correction of keywords in languages such as the Japanese language and the Chinese language that have a large number of homophones.

Given below is the explanation about the correcting unit 70C associated with a swipe operation in the downward direction. FIG. 7 is a block diagram illustrating a specific example of the functional configuration of the correcting unit 70C. As illustrated in FIG. 7, the correcting unit 70C includes a third generating unit 713, a third substitution control unit 723, and a same-category word database 75.

The third generating unit 713 generates correction-candidate keywords (called "third correction-candidate keywords") belonging to the same category (such as "geographical names" or "names of people") as the category of the correction target keyword notified by the display control unit 30. More particularly, the explanation is given below. Firstly, the third generating unit 713 sends the correction target keyword w, which is notified by the display control unit 30, to the same-category word database 75. In the same-category word database 75, data representing the correspondence relationship between keywords and categories is registered in advance. The same-category word database 75 refers to the data registered in advance (i.e., the data representing the correspondence relationship between keywords and categories), determines the category of the correction target keyword w notified by the third generating unit 713, generates a word group (a same-category word group) W_csam(w) of words belonging to the same category as the category of the correction target keyword w, and sends the same-category word group W_csam(w) to the third generating unit 713. Then, the third generating unit 713 generates the same-category word group W_csam(w), which is obtained from the same-category word database 75, as the third correction-candidate keyword group. In this way, the third correction-candidate keywords belonging to the same category as the category of the correction target keyword are generated.

Alternatively, for example, the configuration can be such that the third generating unit 713 obtains, from the input candidate storing unit 40, the input candidate keyword group W_cond(w) corresponding to the correction target keyword w notified by the display control unit 30; and sends the input candidate keyword group W_cond(w) and the correction target keyword w to the same-category word database 75. In that case, the same-category word database 75 determines the category of the correction target keyword w, which is notified by the third generating unit 713, and the category of each input candidate keyword belonging to the input candidate keyword group W_cond(w); generates, from the input candidate keywords belonging to the input candidate keyword group W_cond(w), a word group W_csam(w, W_cond(w)) of input candidate keywords belonging to the same category as the category of the correction target keyword w; and sends the word group W_csam(w, W_cond(w)) to the third generating unit 713. Subsequently, the third generating unit 713 can generate the word group W_csam(w, W_cond(w)), which is obtained from the same-category word database 75, as the third correction-candidate keyword group.

The third substitution control unit 723 performs control to substitute the third correction-candidate keyword, which is selected by the user from among one or more third correction-candidate keyword(s) (from the third correction-candidate keyword group) generated by the third generating unit 713, for the correction target keyword. More particularly, the explanation is given below. Firstly, the third substitution control unit 723 performs control to display the third correction candidate group (W_csam(w) or W_csam(w, W_cond(w)) on the display unit 50. Then, from among the third correction-candidate keyword group displayed on the screen of the display unit 50, the user touches one of third correction-candidate keywords to select it. Subsequently, the third substitution control unit 723 notifies the display control unit 30 about the selected third correction-candidate keyword, and instructs the display control unit 30 to display the selected third correction-candidate keyword by substituting it for the correction target keyword. In response to the instruction, the display control unit 30 performs control to display the third correction-candidate keyword, which is notified by the third substitution control unit 723, by substituting it for the correction target keyword.

In this way, the correcting unit 70C corrects the correction target keyword by substituting a third candidate keyword, which belongs to the same category as the category of the correction target keyword, for the correction target keyword. For example, if W_csam(w) is used as the third correction-candidate keyword group to be presented to the user, not only it becomes possible to correct the errors in voice recognition but it also becomes possible to change the search target to a different content in the same category or to conceptually expand or shorten the content. For example, regarding "Italian cuisine" serving as two keywords (keywords used as a search condition), the keyword "Italian" can be changed to "French" that is a same-category word belonging to the category of "Italian" (such as a "geographical name" category), or a search condition "French cuisine" can be used in the search after the search condition "Italian cuisine". Alternatively, for example, in the case of performing a search with two keywords "Europe trip", the word "Europe" can be changed to the same-category word "Italy" so as to conceptually narrow down the search target.

Meanwhile, for example, in a configuration in which the input candidate keyword group W_cond(w) is presented to the user as the correction-candidate keyword group; if the user-intended keyword w_int is, for example, a geographical name, then selection from the candidates becomes a difficult task because W_cond(w) includes correction candidates of other categories, such as names of people, other than geographical names. In that regard, as described above, the word group W_csam(w, W_cond(w)) included among the input candidate keyword group W cond(w) and belonging to the same category as the category of the correction target keyword w, is used as the third correction-candidate keyword group. With that, the correction candidates can be narrowed down to words having a high degree of relevance to the user-intended keyword.

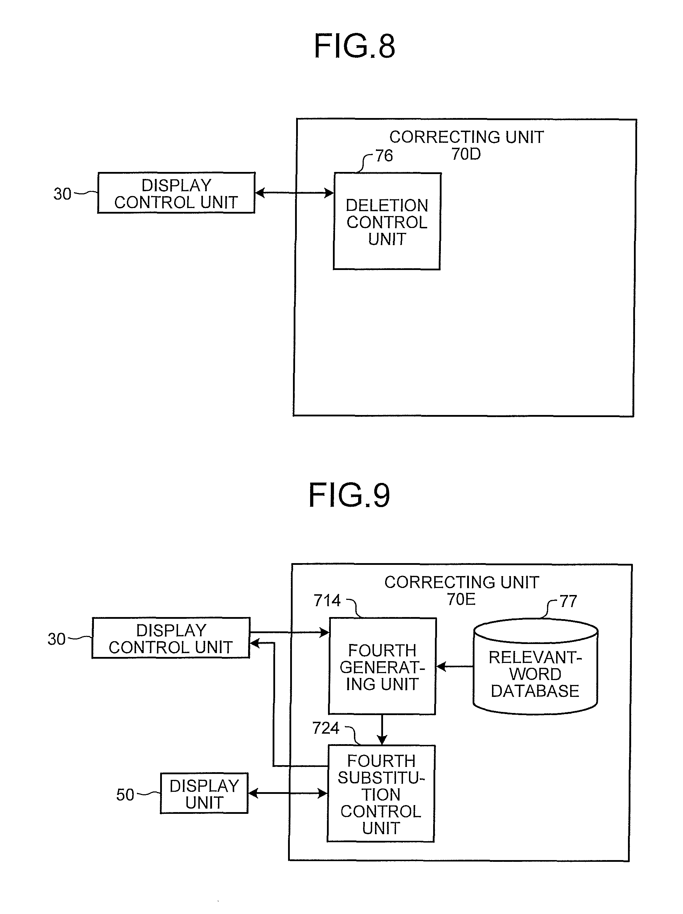

Given below is the explanation about the correcting unit 70D associated with a swipe operation in the leftward direction. FIG. 8 is a block diagram illustrating a specific example of the functional configuration of the correcting unit 70D. As illustrated in FIG. 7, the correcting unit 70D includes a deletion control unit 76. Herein, the deletion control unit 76 performs control to delete the correction target keyword. More particularly, the deletion control unit 76 instructs the display control unit 30 to delete the correction target keyword notified by the display control unit 30. In response to the instruction, the display control unit 30 performs control to delete and hide the correction target keyword, for which the deletion control unit 76 has issued a deletion instruction, among the keywords displayed on the display unit 50.

In this way, the correcting unit 70D performs correction in the form of deleting the correction target keyword. As a result of implementing this correction method, for example, during voice recognition, even if an incorrect keyword not intended by the user is obtained by the obtaining unit 20 due to a false response to background noise; the incorrect keyboard can be deleted. Moreover, for example, of two or more search keywords, any one search keyword can be deleted so as to expand the search target. Furthermore, it becomes possible to perform an operation of keyword substitution by pronouncing a keyword once again subsequently to the deletion.

Given below is the explanation about the correcting unit 70E associated with a swipe operation in the rightward direction. FIG. 9 is a block diagram illustrating a specific example of the functional configuration of the correcting unit 70E. As illustrated in FIG. 9, the correcting unit 70E includes a fourth generating unit 714, a fourth substitution control unit 724, and a relevant-word database 77.

The fourth generating unit 714 generates fourth correction-candidate keywords each including the correction target keyword notified by the display control unit 30. More particularly, the explanation is given below. Firstly, the fourth generating unit 714 sends the correction target keyword w, which is notified by the display control unit 30, to the relevant-word database 77. In the relevant-word database 77, a keyword is stored in a corresponding manner to a relevant-word group formed with one or more relevant words including the keyword. The relevant-word database 77 extracts a relevant-word group W_comp(w) partly including the correction target keyword w notified by the fourth generating unit 714, and sends the relevant-word group W_comp(w) to the fourth generating unit 714. Then, the fourth generating unit 714 generates the relevant-word group W_comp(w), which is obtained from the relevant-word database 77, as the fourth correction-candidate keyword. In this way, the fourth correction-candidate keyword group, which partly includes the correction target keyword, is generated.

Herein, the relevant keyword (the fourth correction-candidate keyword) that is the element of W_comp(w) can be a word w_comp including the keyword w or can be a word string w_comp+ including one or more words relevant to the keyword w. For example, if "tennis" is the keyword w, then a relevant word "tennis racket" can be registered as w_comp in a corresponding manner in the relevant-word database 77. Similarly, if "Italy" is the keyword w, then relevant words "Italy trip" can be registered as w_comp+ in a corresponding manner in the relevant-word database 77.

The fourth substitution control unit 724 performs control to substitute the user-selected fourth correction-candidate keyword, among one or more fourth correction-candidate keywords (the fourth correction-candidate keyword group), for the correction target keyword. More particularly, the explanation is given below. Firstly, the fourth substitution control unit 724 performs control to display the fourth correction-candidate keyword group (W_comp(w)), which is generated by the fourth generating unit 714, on the display unit 50. Then, among the fourth correction-candidate keyword group displayed on the screen of the display unit 50, the user touches one of fourth correction-candidate keywords to select it. Subsequently, the fourth substitution control unit 724 notifies the display control unit 30 about the selected fourth correction-candidate keyword, and instructs the display control unit 30 to display the selected fourth correction-candidate keyword by substituting it for the correction target keyword. In response to the instruction, the display control unit 30 performs control to display the fourth correction-candidate keyword, which is notified by the fourth substitution control unit 724, by substituting it for the correction target keyword.

In this way, the correcting unit 70E corrects the correction target keyword by substituting a fourth correction-candidate keyword, which includes the correction target keyword, for the correction target keyword.

Meanwhile, the correspondence between the correcting units 70 and the gesture operations is not limited to the examples described above. For example, it can be arbitrarily set according to the tasks of the search, the screen configuration of the touch-sensitive display or the standard user interface of the operating system. For example, in the case of selecting the correction method for deleting a keyword, it is believed that a gesture operation of stroking the screen with the aim of moving the correction target keyword to the outside of the screen is an intuitive operation for the user. In other words, it is believed that a gesture operation of stroking the screen with the aim of moving the correction target keyword to the outside of the screen evokes an operation for deletion. In that regard, the gesture operation of stroking (such as swiping) the screen with the aim of moving the correction target keyword to the outside of the screen of the display unit 50 can be associated with the correcting unit 70D. In such a configuration, for example, if the detecting unit 60 detects a gesture operation in which the user touches a finger to the area of the screen of the display unit 50 in which the correction target keyword is displayed and moves the finger to the outside of the screen while touching the concerned area, the selecting unit 80 selects the correcting unit 70D as the correcting unit for correcting the correction target keyword.

Moreover, for example, the configuration can be such that a gesture operation of stroking the screen from the correction target keyword in a direction closest to the outside of the display unit 50 is associated with the correcting unit 70D. In such a configuration, for example, if the detecting unit 60 detects a gesture operation in which the user touches a finger to the area displaying the correction target keyword on the screen of the display unit 50 and moves that finger from the correction target keyword in the direction closest to the outside of the screen while touching the area, the selecting unit 80 selects the correcting unit 70D as the correcting unit for correcting the correction target keyword.

Furthermore, for example, in the case of selecting the correction method in which the correction target keyword is changed to a keyword that includes the correction target keyword, it is believed that a gesture operation of stretching the correction target keyword in the character input direction is an intuitive operation for the user. In other words, a gesture operation of stretching the correction target keyword in the character input direction evokes an operation for performing correction in the form of complementing the correction target keyword. In that regard, for example, the configuration can be such that a gesture operation of stroking the screen toward the direction of writing the characters constituting the correction target keyword is associated with the correcting unit 70E. For example, in the case of correcting a keyword of a language such as Arabic in which the characters are written from right to left, the swipe operation in the leftward direction can be associated with the correcting unit 70E. In that case, for example, if the detecting unit 60 detects a swipe operation of stroking the screen of the display unit 50 in the leftward direction while keeping a finger on the area displaying the correction target keyword on the screen, then the selecting unit 80 selects the correcting unit 70E as the correcting unit for correcting the correction target keyword.

Returning to the explanation with reference to FIG. 2, the searching unit 90 performs a search based on the keyword displayed on the display unit 50. More particularly, the searching unit 90 accesses the target database 100 for searching and, with the keyword displayed by the display control unit 30 on the display unit 50 (i.e., the keyword obtained by the obtaining unit 20 or the keyword corrected by the correcting unit 70) serving as the search condition, searches for relevant words (such as words including the keyword) or relevant documents (such as a document including the keyword). However, the method of searching is not limited to this method, and various known methods of searching can be implemented. Then, the searching unit 90 notifies the search-result display control unit 110 about the search result. Subsequently, the search-result display control unit 110 performs control to display the search result on the display unit 50. As a result, the search result is presented to the user.

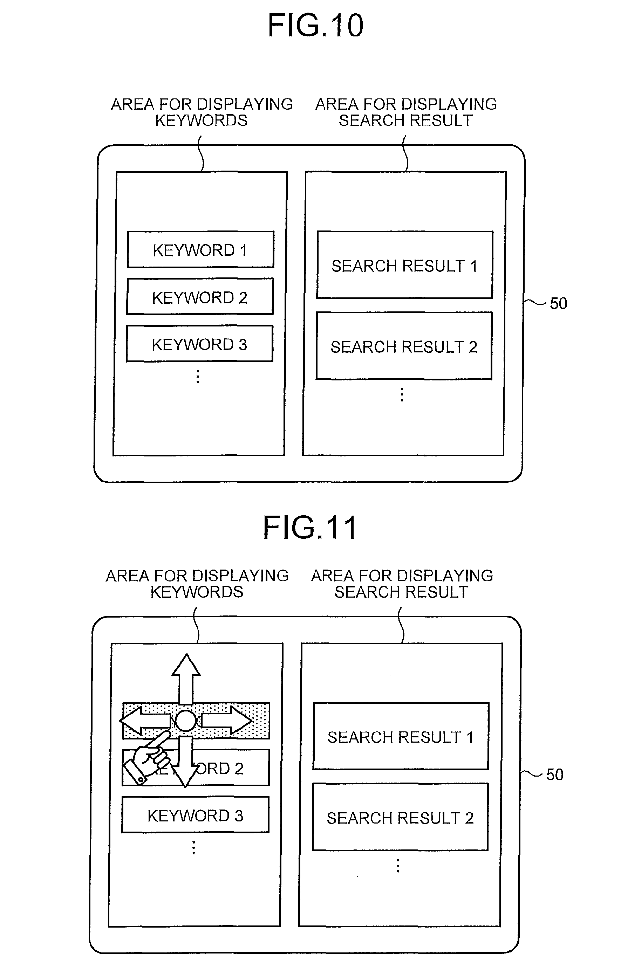

Explained below with reference to FIG. 10 to FIG. 14 are images of an operation screen according to the present embodiment. FIG. 10 is a diagram illustrating an exemplary screen display performed by the display control unit 30 and an exemplary screen display performed by the search-result display control unit 110. The area on the left-hand side of the screen serves as the area for displaying the keywords, while the area on the right-hand side of the screen serves as the area for displaying the search result. In this example, the search result, which is obtained based on the keyword displayed on the display control unit 30, is displayed by the search-result display control unit 110. Meanwhile, the timing of performing an actual search can be arbitrarily decided by the device designer or the user.

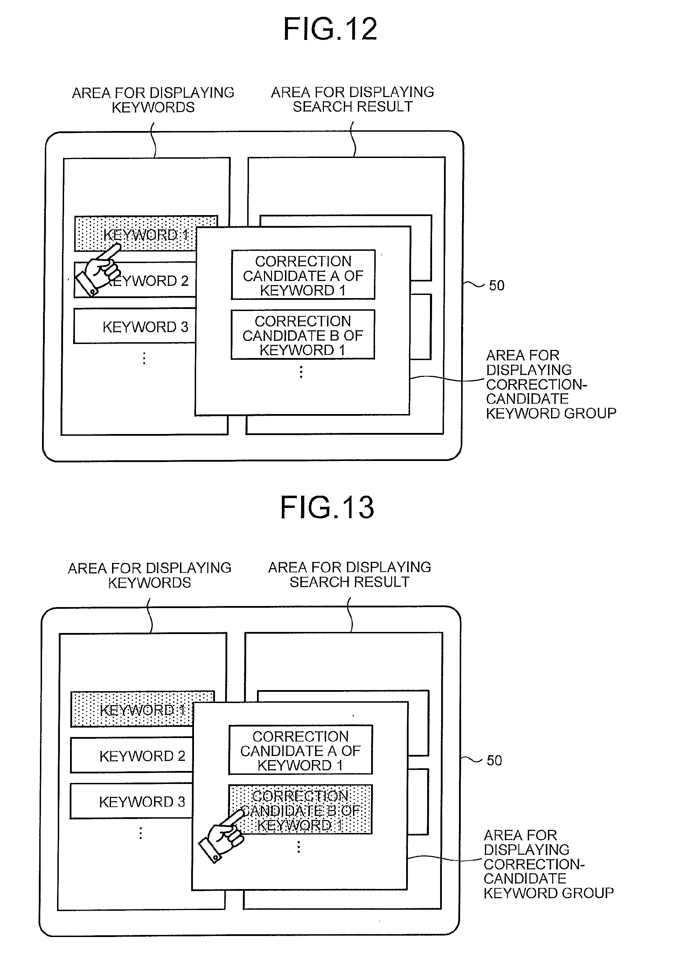

The user can perform a touch operation on the screen and select the correction target keyword from among one or more keywords displayed on the screen. As illustrated in FIG. 11, in the present embodiment, in addition to performing a selection operation by touching a keyword, if a gesture operation is performed with respect to the selected keyword, then the correcting unit 70 associated with the type of gesture is selected. As illustrated in FIG. 11, if a gesture operation (a swipe operation) is performed in which, after a finger is touched to the area of the screen of the display unit 50 in which the correction target keyword is displayed, the finger is moved to left, right, up or down while keeping the finger on the screen and then the finger is taken off the screen, the pre-associated correcting unit 70 is selected according to the type of the trajectory of the finger. Then, as illustrated in FIG. 12, the correction-candidate keyword group that is generated by the selected correcting unit 70 is displayed in a predetermined area of the screen of the display unit 50 (however, if the correcting unit 70D is selected, then the correction target keyword is deleted without displaying the correction-candidate keyword group). The gesture operation in this case is not limited to the movement to left, right, up or down. Alternatively, it is possible to set an arbitrary trajectory, such as a combination of linear movements such as moving downward and returning upward, or a drawing such as a circle or a triangle, or a character, followed after touching the screen.

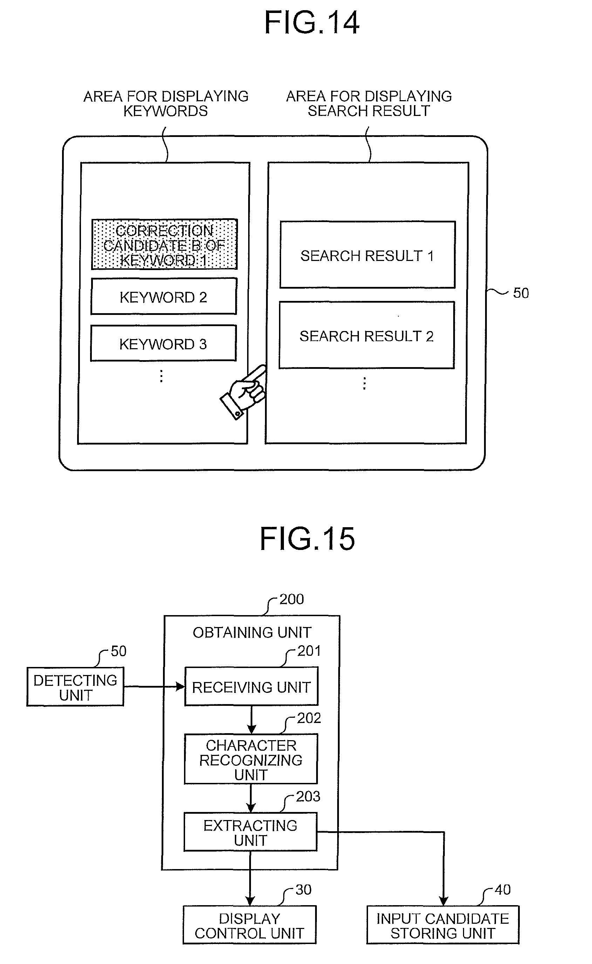

Then, as illustrated in FIG. 13, the user performs a touch operation to select a "correction candidate B of keyword 1" in the correction-candidate keyword group which is displayed. As a result, as illustrated in FIG. 14, "correction candidate B of keyword 1" is substituted for "keyword 1" that is the correction target keyword.

As explained above, in the present embodiment, a plurality of correcting units 70, which implement mutually different correction methods one of which includes correction in the form of deleting the correction target keyword, are associated with a plurality of types of the gesture operation on a one-to-one basis. The correcting unit 70 that is associated with the gesture operation detected by the detecting unit 60 is selected as the correcting unit 70 for correcting the correction target keyword. Thus, for example, depending on the pattern of occurrence of incorrect keywords, if the user performs a gesture operation associated with the correcting unit 70 capable of performing suitable correction, then it is possible to select that correcting unit 70 (i.e., the correcting unit 70 capable of performing suitable correction).

Moreover, for example, if the user wishes to correct the correction target keyword by implementing the correction method of displaying the first correction-candidate keywords having similar pronunciation to the correction target keyword and substituting one of the first correction-candidate keywords for the correction target keyword, then performing the gesture operation associated with the correcting unit 70A is sufficient to perform correction based on the desired correction method. Thus, in the present embodiment, performing a gesture operation associated with any correcting unit 70 is sufficient to select the correcting unit 70 associated with the gesture operation. Hence, there is no need to display icons (such as buttons) on the screen for enabling selection of the correcting units 70. That enables achieving simplification of the display on the screen.

Meanwhile, although the present invention is described with reference to the abovementioned embodiment for a complete and clear disclosure, the appended claims are not to be thus limited but are to be construed as embodying all modifications and alternative constructions that may occur to one skilled in the art that fairly fall within the basic teaching herein set forth.

### (1) First modification example

In the embodiment described above, the explanation is given for a case in which the obtaining unit 20 obtains a keyword using voice recognition. In that case, the microphone 10 that obtains voice signals can be a physical microphone or can be a smartphone connected to a network. In essence, as long as the microphone 10 is a device capable of sending signals in which phonological information of voice is stored, it serves the purpose.

### (2) Second modification example

Meanwhile, the configuration can be such that, instead of installing the microphone 10, a keyword can be obtained by recognizing the characters drawn by the user on the touch-sensitive panel display. More particularly, as illustrated in FIG. 15, the configuration can have an obtaining unit 200 that includes a receiving unit 201, a character recognizing unit 202, and an extracting unit 203. The receiving unit 201 receives stroke information, which represents the trajectory of the positions of touch on the display unit 50 configured as a touch-sensitive panel display. In the example illustrated in FIG. 15, the receiving unit 201 receives a notification about the stroke information from the detecting unit 60. Then, the receiving unit 201 sends the stroke information to the character recognizing unit 202. Subsequently, the character recognizing unit 202 performs character recognition with respect to the received stroke information. More particularly, the character recognizing unit 202 converts the stroke information into an intermediate expression in the form of a text or the like, and sends the conversion result as the result of the character recognition to the extracting unit 203. Then, the extracting unit 203 extracts the keyword from the result of the character recognition performed by the character recognizing unit 202.

In essence, as long as the obtaining unit according to the present invention has the function obtaining an input keyword, it serves the purpose. Herein, a keyword can be input according to any arbitrary method. For example, the obtaining unit according to the present invention can be configured to obtain a keyword from text information that is input by operating an operation device such as a keyboard.

### (3) Third modification example

For example, the configuration can be such that a guide image, which is used to notify the correspondence relationship between gesture operations and the correcting units 70, is displayed on the screen of the display unit 50. For example, when the user keeps on touching the area of the screen of the display unit 50 in which the correction target keyword is displayed (i.e., when the detecting unit 60 detects long-pressing with respect to the correction target keyword), the display control unit 30 can perform control to display a guide image, which is used to notify the correspondence relationship between gesture operations and the correcting units 70, in a predetermined area of the screen. As a result, the user need not memorize the correspondence relationship between gesture operations and the correcting units 70. Rather, by looking at the guide image displayed on the screen, the user can easily understand the gesture operation that is associated with the correcting unit 70 capable of performing the desired correction. The contents of the guide image can be of any arbitrary type. As long as the guide image can inform the user about which gesture operation results in the selection of which correction method (results in the selection of the correcting unit 70 capable of which correction), it serves the purpose.

### (4) Fourth modification example

In the embodiment described above, the selection of the correcting unit 70 is done after the correction target keyword is selected. However, that is not the only possible case. Alternatively, the configuration can be such that the correcting unit 70 is selected before the selection of the correction target keyword. For example, the user can perform a particular gesture operation (such as a swipe operation) with respect to a predetermined area on the screen so as to select the correcting unit 70 corresponding to the particular gesture operation, and can then perform a touch operation on the screen so as to select, from among one or more keywords displayed on the screen, the target keyword for selection to which the correction method of the selected correcting unit 70 is to be applied.

### (5) Fifth modification example,

In the embodiment described above, on the screen of the touch-sensitive panel display, the area on the left-hand side serves as the area for displaying the keywords, while the area on the right-hand side serves as the area for displaying the search result. However, the arrangement of areas for displaying a variety of information can be done in an arbitrary manner. Moreover, the search result may be displayed on a different display, or may be presented in a different modal such as voice. Meanwhile, in the embodiment described above, the detecting unit 60 makes use of the screen of the touch-sensitive panel display. However, it serves the purpose as long as the detecting unit 60 is a device including a pointing device, such as the mouse of a PC, or a sensor glove, or a body-gesture input device using a camera, capable of detecting the selection operation with respect to a keyword displayed on the screen and detecting the gesture operation following the selection operation.

### (Hardware configuration and program)

The information processing device 1 according to the embodiment described above has a hardware configuration including a CPU, a ROM, and a RAM. When the CPU loads a program, which is stored in the ROM, in the RAM and executes the program, the functions of the constituent elements described above (the obtaining unit 20, the display control unit 30, the detecting unit 60, a plurality of the correcting units 70, the searching unit 90, and the search-result display control unit 110) are implemented. However, that is not the only possible case. Alternatively, for example, the functions of at least some of the constituent elements described above (the obtaining unit 20, the display control unit 30, the detecting unit 60, a plurality of correcting units 70, the searching unit 90, and the search-result display control unit 110) can be implemented using hardware circuity in an identical manner to the microphone 10, the display unit 50, the input candidate storing unit 40, and the target database 100 for searching.

Meanwhile, the program executed in the information processing device 1 according to the embodiment described above can be saved as a downloadable file on a computer connected to a network such as the Internet or can be made available for distribution through a network such as the Internet. Alternatively, the program executed in the information processing device 1 according to the embodiment described above can be stored in advance in a nonvolatile memory medium such as a ROM.

### Reference Signs List

- 1: information processing device
- 10: microphone
- 20: obtaining unit
- 21: receiving unit
- 22: voice recognizing unit
- 23: extracting unit
- 30: display control unit
- 40: input candidate storing unit
- 50: display unit
- 60: detecting unit
- 70: correcting unit
- 73: assonant-word database
- 74: homophone database
- 75: same-category word database
- 76: deletion control unit
- 77: relevant-word database
- 80: selecting unit
- 90: searching unit
- 100: target database for searching
- 110: search-result display control unit
- 200: obtaining unit
- 201: receiving unit
- 202: character recognizing unit
- 203: extracting unit
- 711: first generating unit
- 712: second generating unit
- 713: third generating unit
- 714: fourth generating unit
- 721: first substitution control unit
- 722: second substitution control unit
- 723: third substitution control unit
- 724: fourth substitution control unit

## Claims

1. An information processing device comprising:
an obtaining unit that obtains a keyword;
a display control unit that performs control to display the keyword on a display unit;
a detecting unit that detects a gesture operation performed on the display unit;
a plurality of correcting units that are capable of correcting a correction target keyword to be corrected among one or more keywords displayed on the display unit and that implement mutually different correction methods, one of the correction methods including correction in form of deleting the correction target keyword; and
a selecting unit that, according to a gesture operation detected by the detecting unit, selects one of the plurality of correcting units as the correcting unit for correcting the correction target keyword.

2. The information processing device according to claim 1, wherein the plurality of correcting units are associated to a plurality of types of gesture operation on a one-to-one basis.

3. The information processing device according to claim 1, wherein the plurality of correcting units include a correcting unit which includes a deletion control unit that performs control to delete the correction target keyword.

4. The information processing device according to claim 3, wherein, when the detecting unit detects a gesture operation of stroking a screen of the display unit so as to move the correction target keyword to an area outside of the screen, the selecting unit selects the correcting unit including the deletion control unit.

5. The information processing device according to claim 3, wherein, when the detecting unit detects a gesture operation of stroking a screen of the display unit from the correction target keyword in a direction closest to outside of the screen, the selecting unit selects the correcting unit including the deletion control unit.

6. The information processing device according to claim 1, wherein the plurality of correcting units include a correcting unit which includes
a first generating unit that generates a first correction-candidate keyword having similar pronunciation to the correction target keyword, and
a first substitution control unit that performs control to substitute the first correction-candidate keyword, which is selected by a user from among one or more first correction-candidate keywords generated by the first generating unit, for the correction target keyword.

7. The information processing device according to claim 1, wherein the plurality of correcting units include a correcting unit which includes
a second generating unit that generates a second correction-candidate keyword having similar pronunciation to the correction target keyword but having a different spelling from the correction target keyword, and
a second substitution control unit that performs control to substitute the second correction-candidate keyword, which is selected by a user from among one or more second correction-candidate keywords generated by the second generating unit, for the correction target keyword.

8. The information processing device according to claim 1, wherein the plurality of correcting units include a correcting unit which includes
a third generating unit that generates a third correction-candidate keyword belonging to same category as the correction target keyword, and
a third substitution control unit that performs control to substitute the third correction-candidate keyword, which is selected by a user from among one or more third correction-candidate keywords generated by the third generating unit, for the correction target keyword.

9. The information processing device according to claim 1, wherein the plurality of correcting units include a correcting unit which includes
a fourth generating unit that generates a fourth correction-candidate keyword including the correction target keyword, and
a fourth substitution control unit that performs control to substitute the fourth correction-candidate keyword, which is selected by a user from among one or more fourth correction-candidate keywords generated by the fourth generating unit, for the correction target keyword.

10. The information processing device according to claim 9, wherein, when the detecting unit detects a gesture operation of stroking a screen of the display unit toward a direction of writing characters constituting the correction target keyword, the selecting unit selects the correcting unit including the fourth generating unit and the fourth substitution control unit.

11. The information processing device according to claim 1, wherein the obtaining unit includes
a receiving unit that receives a voice signal,
a voice recognizing unit that performs voice recognition on the voice signal, and
an extracting unit that extracts the keyword from a voice recognition result obtained by performing the voice recognition.

12. The information processing device according to claim 1, wherein
the display unit is a touch-sensitive panel display, and
the obtaining unit includes
a receiving unit that receives stroke information representing a locus of positions of touch on the display unit,
a character recognizing unit that performs character recognition on the stroke information received by the receiving unit, and
an extracting unit that extracts the keyword from a character recognition result obtained by performing the character recognition.

13. The information processing device according to claim 1, further comprising a searching unit that performs a search based on the keyword displayed on the display unit.

14. An information processing method comprising:
obtaining a keyword;
performing control to display the keyword on a display unit; and
selecting, according to a gesture operation performed on the display unit, one of a plurality of correcting units, which are capable of correcting a correction target keyword to be corrected among one or more keywords displayed on the display unit and which implement mutually different correction methods, one of the correction methods including correction in form of deleting the correction target keyword, as the correcting unit for correcting the correction target keyword.

15. An information processing program that causes a computer to function as:
an obtaining unit that obtains a keyword;
a display control unit that performs control to display the keyword on a display unit;
a detecting unit that detects a gesture operation performed on the display unit;
a plurality of correcting units that are capable of correcting a correction target keyword to be corrected among one or more keywords displayed on the display unit and that implement mutually different correction methods, one of the correction methods including correction in form of deleting the correction target keyword; and
a selecting unit that, according to a gesture operation detected by the detecting unit, selects one of the plurality of correcting units as the correcting unit for correcting the correction target keyword.
